# EUROPEAN PATENT SPECIFICATION

(11) **EP 3 716 778 B1**
(45) Date of publication and mention of the grant of the patent: **20.03.2024**
(21) Application number: 18811002.7
(22) Date of filing: 26.11.2018
(51) Int. Cl.: A23G 9/32, A23G 9/38, A23G 9/44

(54) **FROZEN CONFECTION COMPOSITION**
GEFRORENE SÜSSWARENZUSAMMENSETZUNG
COMPOSITION DE CONFISERIE CONGELÉE

(30) Priority: 27.11.2017 EP 17203918
(43) Date of publication of application: 07.10.2020
(73) Proprietor: Unilever IP Holdings B.V., 3013 AL Rotterdam (NL)
(72) Inventor: FREEMAN, Jennifer, Elizabeth, Bedford Bedfordshire MK44 1LQ (GB); MACFARLANE, Martin, Bedford Bedfordshire MK44 1LQ (GB)
(74) Representative: Turner, Felicity Margaret Mary
(86) International application number: PCT/EP2018/082613
(87) International publication number: WO 2019/102017

(56) References cited:
- EP-A2- 1 967 077
- EP-B1- 1 967 077
- WO-A1-00/01246
- WO-A1-2016/116336
- US-A- 4 542 035
- US-A- 5 084 295
- US-A1- 2006 233 919
- DATABASE GNPD [Online] MINTEL; 7 November 2017 (2017-11-07), anonymous: "Cookies & Creme Light Ice Cream", XP093024458, Database accession no. 5216739

## Description

### Field of the invention

Frozen confection composition wherein significantly reduced shrinkage of the product is observed on heat shock testing of the frozen confection product.

### Background of the invention

Conventional ice cream and related products contain compositions typically comprising fat 7 to 15 wt%; milk protein 4 to 5 wt%; lactose 5 to 7 wt%; other sugars 12 to 16 wt%; stabilisers emulsifiers and flavours about 0.5 wt%. The total amount of solids is typically 28 to 40 wt% and water content 60 to 72 wt%. 'The Science of Ice Cream', C. Clarke, RSC 2004, page 39.

Shrinkage of frozen confection products during storage may be caused by a variety of factors, including pressure and temperature fluctuations, also known as heat-shock. Upon changes in temperature and pressure it has been postulated that the air cells of the frozen confection, i.e. the discrete air bubbles, coalesce and form continuous channels, resulting in shrinkage and ultimately the collapse of the product's structure. One contributing factor to shrinkage is the loss of stability of the frozen confection composition of the frozen confection product. Stability of a frozen confection product may be due to the presence of solid fat particles within the frozen confection composition. Solid fat particles of a frozen confection increase the matrix viscosity and sit at the air interface, and consequently increase the stability of a frozen confection composition.

As the fat content of a frozen confection contributes to its stability, when reducing the fat content of frozen confection compositions, the stability of the frozen confection conferred by the fat particles must be considered. One method to improve the stability of a reduced fat frozen confection composition is to prepare the frozen confection using high pressure homogenization. US 6,156,367 discloses that it is possible to prepare a frozen confection composition with a zero or low-fat content and retain the high quality of the product, i.e. its stability, by increasing the homogenization pressure from the conventional pressure of 150 bar to 250 bar or greater. In order to retain the high quality of the frozen confection, the ratio of micellar protein to sugar must be specific, i.e. at a level of 2 wt% micellar casein in the aqueous phase of the composition the total sugar content must be at least 30 wt%, at 5 wt% micellar casein, the total sugar content must be at least 13 wt%.

Correspondingly, EP 0 641 168 B1 discloses that fats and/or carbohydrates may be replaced by compounds with similar properties, i.e. fats may be replaced with carbohydrates with a lower caloric value than the fats they replace. EP 0 641 168 B1 discloses zero fat whipped frozen dessert products comprising zero fat, 22 wt% sugars and combinations of various unsaturated monoglyceride emulsifiers of 0.6 to 1.0 wt%.

WO 00/01246 A1 discloses a method for the preparation of a frozen product using a homogeniser operating at higher pressures. US 4,542,035 discloses aerated frozen desserts with improved stability and smoothness. US 5,084,295 discloses low calorie frozen desserts having a smooth, nongritty mouthfeel.

Known frozen confection products, such as Halo Top (Halo Top), Oppo (Oppo) and Koupe (Koupe), have fat to protein ratios of 0.4:1; 1.2:1; and 0.2:1 respectively. However, all three products are observed to have poor stability after exposure to heat shock conditions. The poor stability is observed either by shrinkage of the product or easy decompression of the frozen confection container comprising the frozen confection. Shrinkage of frozen confection compositions must be avoided in order to maintain consumer quality standards.

It has been surprisingly found that compositions comprising a reduced sugar content, a fat protein ratio less than 1:1, one or more emulsifiers; wherein the compositions are prepared by a process comprising homogenization at a pressure of 200 bar or greater, have significantly reduced shrinkage after heat-shock testing.

### Summary of the invention

The present invention is defined by the claims.

The present invention discloses a frozen confection comprising an emulsifier, from 1 wt% to 5 wt% fat, 4 wt% to 15 wt% protein, from 2.5 wt% to 15 wt% sugar, an emulsifier to fat ratio of 0.07:1 to 0.3:1, and a fat to protein ratio of less than 1:1, wherein the fat droplets of the homogenised pre-mix of the frozen confection composition have a droplet size d(3,2) below 0.6 µm, and the sugar is selected from the group consisting of monosaccharides, disaccharides, oligosaccharides, and mixtures thereof. Reduced shrinkage of the product is observed after heat shock testing of the frozen confection product.

### Detailed description of the invention

The frozen confection comprises an emulsifier, from 1 wt% to 5 wt% fat, and a fat to protein ratio of less than 1:1, wherein the fat droplets of the homogenised pre-mix of the frozen confection composition have an average droplet size d(3,2) below 0.6 µm.

The frozen confection comprises from 1 wt% to 5 wt% fat, 4 wt% to 15 wt% protein, and a fat to protein ratio of less than 1:1, wherein the fat droplets of the homogenised pre-mix of the frozen confection composition have an average droplet size d(3,2) below 0.6 µm.

For the understanding of the invention, a frozen confection comprising from 1 wt% to 5 wt% fat, 4 wt% to 15 wt% protein, from 2.5 wt% to 15 wt% sugars and a fat to protein ratio of less than 1:1, wherein the fat droplets of the frozen confection composition after heat shock testing have an average droplet size d(3,2) below 0.85 µm. Preferably the average droplet size d(3,2) is from 0.60 µm to 0.85 µm. More preferably the average droplet size d(3,2) is from 0.70 µm to 0.85 µm. Even more preferably the average droplet size d(3,2) is from 0.75 µm to 0.85 µm.

Fats, dairy and non-dairy for use in frozen confection compositions are provided in 'Ice Cream' H. Goff and R.Hartel, Springer 7th Ed, 2013, pages 51-60 and 'The Science of Ice Cream' C. Clarke, RSC 2004, pages 45-48. A frozen confection comprising from 1 wt% to 5 wt% fat; more preferably from 1 wt% to 4 wt% fat; even more preferably from 1 wt% to 3 wt% fat, or from 1.5 wt% to 5 wt% fat; more preferably from 1.5 wt% to 4 wt% fat; even more preferably from 1.5 wt% to 3 wt% fat.

Protein means protein available from milk products or vegetable sources; such as skimmed milk powder; butter milk; butter milk powder; milk solids non-fat (MSNF); whey protein; soy protein; pea protein and oat protein. Suitable protein sources are found in in 'IceCream' H. Goff and R.Hartel, Springer 7th Ed, 2013, pages 60-65. A frozen confection comprising from 4.0 wt% to 15 wt% protein; more preferably from 4.5 wt% to 12.5 wt% protein; or from 5 wt% to 10 wt% protein; more preferably from 5 wt% to 12.5 wt% protein; or from 5 wt% to 15 wt% protein; more preferably from 5.5 wt% to 10 wt% protein; or from 5.5 wt% to 12.5 wt% protein; more preferably from 5.5 wt% to 15 wt% protein.

Sugar means the total sugar content of the frozen confection composition. Sugar is selected from the group consisting of monosaccharides, disaccharides, oligosaccharides, and mixtures thereof. Such saccharides include: sucrose, fructose, glucose and lactose. Prior to use, the sugar may be in a crystalline, powder or syrup form.

The frozen confection composition comprises from 2.5 wt% to 15 wt% sugars, preferably from 2.5 wt% to 12 wt% sugars, more preferably from 2.5 wt% to 10 wt% sugars, or from 4 wt% to 15 wt% sugars, preferably from 4 wt% to 12 wt% sugars, more preferably from 4 wt% to 10 wt% sugars, or from 5 wt% to 15 wt% sugars; preferably from 5 wt% to 12 wt% sugars; more preferably from 5 wt% to 10 wt% sugars;

The frozen confection composition may also comprise flavours from 0 to 0.2 wt%. The total amount of solids is typically from 28 to 40 wt% and water content from 55 to 72 wt%.

The frozen confection composition may also comprise sweeteners selected from the group consisting of Rebaudioside A [also known as Stevia (Cargill Inc)]; sucralose; acesulfame potassium (Nutrinova); sugar alcohols and mixtures thereof. Sugar alcohols include erythritol, sorbitol, xylitol, mannitol, lactitol or mixtures thereof.

The frozen confection composition may also comprise soluble gluco fibre ingredients such as Promitor (Tate & Lyle).

Fat to protein ratio of less than 1:1, means that the wt% amount of fat is less than the wt% of protein present in the frozen confection composition. The alternative term 'with the proviso that the fat to protein ratio is less than 1:1' is intended to mean the equivalent to a 'fat to protein ratio of less than 1:1',

The frozen confection composition comprises a wt%/wt% emulsifier to fat ratio of from 0.07:1 to 0.3:1 preferably; from 0.08:1 to 0.25:1; more preferably from 0.10:1 to 0.20:1. Emulsifiers are defined as in Arbuckle, W.S., Ice Cream, 4th Edition, AVI publishing, 1986, ch 6 pages 92 to 94 and described in 'IceCream', H.D. Goff and R. W. Hartel; Springer, 7th Edition (2013); pages 82-84.

The term emulsifier is intended to include mixtures of different emulsifying compounds.

It is generally preferred that the emulsifier comprises at least 40% by weight fatty acid monoglyceride esters and at least 20% by weight fatty acid diglyceride esters. Suitable fatty acids for the mono- and diglycerides emulsifier may have C16 or C18 chains. The frozen confection composition comprises emulsifier from 0.05 to 1 wt%; preferably from 0.1 to 0.8 wt%; more preferably from 0.2 to 0.6 wt%. Other emulsifiers having ester linked fatty acids (which may also be (partly) unsaturated) as well as emulsifiers not having ester linked fatty acids may also be present, such as lecithin.

The emulsifier is selected from the group consisting of mono- and di-glycerides of saturated fatty acids, mono- and di-glycerides of partially saturated fatty acids, polyglycerol esters, sorbitan esters, stearoyl lactylate, lactic acid esters, citric acid esters, acetylated monoglyceride, diacetyl tartaric acid esters, polyoxyethylene sorbitan esters, and lecithin and mixtures thereof.

Stabilizers are defined as in Arbuckle, W.S., Ice Cream, 4th Edition, AVI Publishing, 1986, ch 6, pages 84 to 92. They can for example be locust bean gum, carrageenan, guar gum, gelatin, carboxy methyl cellulose gum, pectin, algin products and mixtures thereof. Preferably, the frozen confection composition comprises a stabiliser selected from the group consisting of guar, LBG and mixtures thereof. The frozen confection composition comprises from 0.1 wt% to 1.5 wt% stabiliser; preferably from 0.2 wt% to 1.0 wt% stabiliser; more preferably from 0.3 wt% to 0.8 wt% stabiliser.

The present invention also discloses a process for preparing a frozen confection composition according to claims 1 to 8 comprising the following steps:
(a) providing a pre-mix of frozen confection composition ingredients;
(b) homogenisation of the pre-mix at a pressure of from 200 to 400 bar;
(c) pasteurisation;
(d) cooling;
(e) freezing and aeration;
(f) extrusion; and,
(g) optionally deep freezing.

Pre-mix means the frozen confection composition comprising all ingredients that have been mixed prior to step (b), i.e. prior to homogenisation.

The frozen confection composition, wherein the frozen confection pre-mix is homogenised. Wherein the homogenisation pressure is from 200 to 400 bar; preferably from 200 to 300 bar.

The frozen confection composition, wherein the overrun is from 60 % to 180 %; preferably from 80 % to 160%; more preferably from 100 % to 140 %. The calculation and definition of overrun is described in 'IceCream', H.D. Goff and R. W. Hartel; Springer, 7th Edition (2013); pages 184-188.

The frozen confection product means the frozen confection composition prepared by the process comprising steps (a) to (g); wherein the product of step (f) is packaged into a carton or tub and stored according to step (g).

Heat shock conditions means temperature cycling conditions wherein the frozen confection composition is subjected to fluctuating temperature conditions for 14 days (2 weeks). The temperature conditions fluctuate between -20 °C and +10 °C. Temperature cycling is designed to accelerate some of the key deterioration mechanisms for frozen confection, for example, ice recrystallisation, moisture migration into cones, shrinkage. The extent of product deterioration after 2 weeks mimics the level of deterioration seen in a product passing through a typical cold chain.

The frozen confection product display a shrinkage of up to 15 vol% after heat shock conditions. A frozen confection product, wherein the confection displays shrinkage of from 0 vol% to 15 vol% after heat shock conditions. A frozen confection product, wherein the confection displays shrinkage of from 0 vol% to 10 vol% after heat shock conditions. A frozen confection product, wherein the confection displays shrinkage of from 0 vol% to 5 vol% after heat shock conditions.

### Examples

### Materials

- Skimmed milk powder (Dairy Crest, Esher, Surrey, UK). Protein content 35 % w/w.
- Soluble Gluco Fibre 70R (Promitor; Tate & Lyle).
- Milk protein concentrate 80% protein SF K (Friesland Campina)

### Sources of Emulsifier:

### MDG 60% Mono Sat.:

- Grinsted mono- and di-glycerides HP60 (DuPont)
   ∘ Mono- and di-glycerides of saturated fatty acids made from edible, fully hydrogenated palm oil: 60 % w/w monoglyceride (saturated, therefore); 1 % w/w unsaturated monoglyceride (unsaturated,).

### MDG 70% Mono Part.Sat.:

- Grinsted mono- and di-glycerides PS222 (DuPont)
   ∘ Mono- and di-glycerides of partially saturated fatty acids made from edible, refined palm based fats and/or fully hardened palm based fat: 72 % w/w monoglyceride (saturated); 15 % w/w unsaturated monoglyceride (unsaturated).

### General Experimental:

### Frozen Confection Manufacture:

### Preparation of the frozen confection pre-mix.

Pre-mix (50 kg) was prepared by adding the stabilisers and emulsifiers to hot water at 80 °C, followed by the sugars and sweeteners, protein, cream and flavour.

The pre-mix was then heated to 82 °C with a plate heat exchanger, followed by homogenisation with a two stage valve homogeniser (APV Crepaco Homogeniser F-8831 3DDL) at 250 bar and a back pressure of around 10 % of the homogenisation pressure. The pre-mix was then pasteurised at 82 °C for 25 seconds. The mix was cooled to 5 °C with a plate heat exchanger and stored at 2 °C until further processing.

### (i) Preparation of the frozen confection product

The pre-mix, as prepared above, was processed through an ice cream freezer [scraped surface heat exchanger (APV M75)]. All ice cream was produced at a mix throughput of approximately 40 l per hour at an operating pressure of 4 bar and 100 % overrun with an extrusion temperature of between -5 and -6 °C. Products were collected in 500 ml waxed paper cartons or tubs and hardened in a blast freezer at -35 °C for 2 hours, before storage at -25 °C.

### Temperature cycling/Heat Shock Test:

A 500 ml ice cream block of dimensions L - 145mm W - 90mm H - 38mm is removed from storage at -25 °Cand repeatedly temperature cycled as follows:

| | |
|---|---|
| Step 1: | 11.5hrs at -20 °C |
| Step 2: | 30 minutes overshoot to +10 °C (set temperature increase to +1 °C per minute) |
| Step 3: | 11.5hrs at -10 °C |
| Step 4: | 30 minutes overshoot to +10 °C (set temperature increase to +1 °C per minute for first 20 minutes only) |
| | for 14 days and then assessed at -25 °C. |

The temperature cycling is designed to accelerate some of the key deterioration mechanisms for frozen confections, for example, ice recrystallisation, moisture migration into cones, shrinkage. The extent of product deterioration after 2 weeks mimics the level of deterioration seen in a product passing through a typical cold chain.

### Measurement of average fat droplet size d(3,2)

EP 1 094 718 B1 [0024] - [0026] 'Mastersizer Method' was followed in order to measure the average fat droplet size d(3,2).

### Measurement of Shrinkage:

Following temperature cycling, the containers were opened and the loss of volume of the frozen confection from the original volume, i.e. the amount of shrinkage of the frozen confection from the top and sides of the container, was measured by ruler and the shrinkage in vol% was estimated.

**Table 1: Frozen Confection Composition:**

| | | | **Comparative Examples** | | | | |
|---|---|---|---|---|---|---|---|
| **Ingredient (wt%, unless otherwise stated)** | **Ex 1** | **Ex 2** | **A** | **B** | **C HALO TOP** | **D OPPO** | **E KOUPE** |
| Cream sweet 40% fat | 5.00 | | 6.00 | 6.00 | | | |
| Cream MSNF | | 3.0 | | | | | |
| Cream fat | | 2.40 | | | | | |
| Milk powder skimmed | 9.80 | 10.00 | 9.80 | 9.80 | | | |
| Sucrose | 2.00 | 2.00 | 2.00 | 2.00 | | | |
| Soluble Glucose Fibre | 9.50 | 9.00 | 9.50 | 9.50 | | | |
| Polydextrose | | | | | | | x |
| Milk protein Concentrate | 5.00 | 6.05 | 4.95 | 4.95 | x | | |
| Erythritol KH | 7.00 | 7.00 | 7.00 | 7.00 | x | x | |
| Rebaudioside A | 0.03 | 0.03 | 0.03 | 0.03 | x | x | |
| Locust Bean Gum | 0.20 | 0.20 | 0.15 | 0.15 | x | x | X |
| Guar Gum | 0.20 | 0.20 | 0.15 | 0.15 | x | x | x |
| Carrageenan | | | | | | x | x |
| Sodium Alignate | | | | | | x | |
| MDG 60% Mono Sat. | 0.20 | | | | | x | x |
| MDG 70% Mono Part.Sat. | 0.20 | | | | | x | x |
| Sugared egg yolk | | 0.80 | | | x | | |
| Water | 60.87 | 62.30 | 60.42 | 60.42 | | | |
| Total Solids (wt%) | 35.32 | 35.49 | 35.24 | 35.24 | | | |
| Fat (g per 100g) | 2.5 | 2.5 | 2.53 | 2.53 | 3.1 | 3.8 | 3.1 |
| Protein (g per 100g) | 7.49 | 7.5 | 7.46 | 7.46 | 7.8 | 3.1 | 13.3 |
| Fat:Protein (wt/wt) | 0.33:1 | 0.33:1 | 0.34:1 | 0.34:1 | 0.4:1 | 1.23:1 | 0.23:1 |
| Emulsifier:Fat | 0.17:1 | 0.03:1 | N/A | N/A | | | |
| Sugar (g per 100g) | 8.50 | 8.54 | 8.52 | 8.52 | 7.8 | 6.5 | 8.0 |
| Total Sugar wt% | 8.50 | 8.54 | 8.52 | 8.52 | | | |
| Kcal | 108 | | 108 | 108 | 94 | 76 | 158 |
| Homogenization (bar) | 250 | 150 | 250 | 150 | | | |
| d[3,2] after heat shock conditions (µm) | 0.769 | 0.689 | 0.608 | 1.22 | | 0.656 | 0.614 |
| Shrinkage from top | None | 1.5 cm | 2.0 cm | | | 1.4 cm | None |
| Shrinkage from walls | No | No | yes | | | yes | no |
| Estimated total shrinkage | None | 23 | 28 | | | 18 | No visible shrinkage |
| Difficulty of Decompression when Squeezed by Hand | Hard | Hard | | | | Easy | Easy |
| Consistency | Firm | Firm | | | | | Sticky, soft, |

No visible shrinkage is observed for comparative Example E; however, the tub was easily compressible by hand. This means that, although the product did not show visible signs of shrinkage when the product was opened, the stability of the frozen confection has been reduced. This is due to the fact that air cell coalescence; i.e. the same effect that is responsible for shrinkage, occurs, but, the frozen confection has a sticky and soft consistency. The sticky and soft consistency enables the composition to retain a coverage of composition close to the top of the tub, but, within the composition in the tub, the structure has deteriorated allowing for air pockets to form and resulting in an easily decompressible tub.

Example 1 demonstrates that from 0.1 to 1.0 wt% emulsifier from 0 wt% to 5 wt% fat and a fat to protein ratio of less than 1:1; wherein the fat droplets of the homogenised pre-mix of the frozen confection composition have an average fat droplet size d(3,2) of 0.6 µm or less and after heat shock conditions, 0.8 µm or less. No shrinkage is observed after heat shock conditions.

## Claims

1. A frozen confection composition comprising an emulsifier, from 4 wt% to 15 wt% protein, from 2.5 wt% to 15 wt% sugar, from 1 wt% to 5 wt% fat, an emulsifier to fat ratio of 0.07:1 to 0.3:1, and a fat to protein ratio of less than 1:1; wherein the fat droplets of the homogenised pre-mix of the frozen confection composition has an average droplet size d(3,2) of 0.6 µm or less, and the sugar is selected from the group consisting of monosaccharides, disaccharides, oligosaccharides, and mixtures thereof.

2. A frozen confection composition according to claim 1 comprising an emulsifier to fat ratio of 0.08:1 to 0.25:1.

3. A frozen confection composition according to claims 1 to 2 comprising from 0.1 wt% to 1.0 wt% emulsifier.

4. A frozen confection composition according to claims 1 to 3 wherein the emulsifier is selected from the group consisting of saturated and unsaturated monoglycerides.

5. A frozen confection composition according to claims 1 to 4 comprising from 5 wt% to 15 wt% protein.

6. A frozen confection composition according to claims 1 to 5 comprising from 2.5 wt% to 12 wt% sugar.

7. A frozen confection composition according to claims 1 to 6, wherein the confection displays shrinkage of 15 vol% or less after heat shock testing.

8. A frozen confection composition according to claims 1 to 7, wherein the fat droplets of the frozen confection composition after heat shock testing have an average droplet size d(3,2) from 0.70 µm to 0.85 µm.

9. A process for preparing a frozen confection composition according to claims 1 to 8, comprising the steps of:
(a) providing a pre-mix of frozen confection composition ingredients;
(b) homogenisation of the pre-mix at a pressure of from 200 to 400 bar;
(c) pasteurisation;
(d) cooling;
(e) freezing and aeration;
(f) extrusion; and,
(g) optionally deep freezing.

## Patentansprüche

1. Gefrorene Konfektzusammensetzung, umfassend einen Emulgator, 4 Gew.-% bis 15 Gew.-% Protein, 2,5 Gew.-% bis 15 Gew.-% Zucker, 1 Gew.-% bis 5 Gew.-% Fett, ein Emulgator/Fett-Verhältnis von 0,07:1 bis 0,3:1 und ein Fett/Protein-Verhältnis von weniger als 1:1, wobei die Fetttröpfchen der homogenisierten Vormischung der gefrorenen Konfektzusammensetzung eine durchschnittliche Tröpfchengröße d(3,2) von 0,6 µm oder weniger aufweisen und wobei der Zucker aus der Gruppe, bestehend aus Monosacchariden, Disacchariden, Oligosacchariden und Mischungen davon, ausgewählt ist.

2. Gefrorene Konfektzusammensetzung nach Anspruch 1, umfassend ein Emulgator/Fett-Verhältnis von 0,08:1 bis 0,25:1.

3. Gefrorene Konfektzusammensetzung nach den Ansprüchen 1 bis 2, umfassend 0,1 Gew.-% bis 1,0 Gew.-% Emulgator.

4. Gefrorene Konfektzusammensetzung nach den Ansprüchen 1 bis 3, wobei der Emulgator aus der Gruppe, bestehend aus gesättigten und ungesättigten Monoglyceriden, ausgewählt ist.

5. Gefrorene Konfektzusammensetzung nach den Ansprüchen 1 bis 4, umfassend 5 Gew.-% bis 15 Gew.-% Protein.

6. Gefrorene Konfektzusammensetzung nach den Ansprüchen 1 bis 5, umfassend 2,5 Gew.-% bis 12 Gew.-% Zucker.

7. Gefrorene Konfektzusammensetzung nach den Ansprüchen 1 bis 6, wobei das Konfekt nach dem Hitzeschocktest eine Schrumpfung von 15 Vol.-% oder weniger aufweist.

8. Gefrorene Konfektzusammensetzung nach einem der Ansprüche 1 bis 7, wobei die Fetttröpfchen der gefrorenen Konfektzusammensetzung nach dem Hitzeschocktest eine durchschnittliche Tröpfchengröße d(3,2) von 0,70 µm bis 0,85 µm aufweisen.

9. Verfahren zur Herstellung einer gefrorenen Konfektzusammensetzung nach den Ansprüchen 1 bis 8, umfassend die Schritte:
(a) Bereitstellen einer Vormischung aus Zutaten für gefrorene Konfektzusammensetzungen;
(b) Homogenisieren der Vormischung bei einem Druck von 200 bis 400 bar;
(c) Pasteurisieren;
(d) Kühlen;
(e) Einfrieren und Belüften;
(f) Extrudieren; und
(g) optionales Tiefgefrieren.

## Revendications

1. Composition de confiserie glacée comprenant un émulsifiant, de 4 % en poids à 15 % en poids de protéines, de 2,5 % en poids à 15 % en poids de sucre, de 1 % en poids à 5 % en poids de graisses, un rapport émulsifiant à graisses de 0,07:1 à 0,3:1, et un rapport graisses à protéines inférieur à 1:1; dans laquelle les gouttelettes de graisses du pré-mélange homogénéisé de la composition de confiserie glacée ont une taille moyenne de gouttelettes d(3,2) de 0,6 µm ou moins, et le sucre est choisi dans le groupe consistant en les monosaccharides, les disaccharides, les oligosaccharides et les mélanges de ceux-ci.

2. Composition de confiserie glacée selon la revendication 1 comprenant un rapport émulsifiant à graisses de 0,08:1 à 0,25:1.

3. Composition de confiserie glacée selon les revendications 1 à 2 comprenant de 0,1 % en poids à 1,0 % en poids d'émulsifiant.

4. Composition de confiserie glacée selon les revendications 1 à 3 dans laquelle l'émulsifiant est choisi dans le groupe consistant en les monoglycérides saturés et insaturés.

5. Composition de confiserie glacée selon les revendications 1 à 4 comprenant de 5 % en poids à 15 % en poids de protéines.

6. Composition de confiserie glacée selon les revendications 1 à 5 comprenant de 2,5 % en poids à 12 % en poids de sucre.

7. Composition de confiserie glacée selon les revendications 1 à 6, dans laquelle la confiserie présente un retrait de 15 % en volume ou moins après un test de choc thermique.

8. Composition de confiserie glacée selon les revendications 1 à 7, dans laquelle les gouttelettes de graisses de la composition de confiserie glacée après un test de choc thermique ont une taille moyenne de gouttelettes d(3,2) de 0,70 µm à 0,85 µm.

9. Procédé pour préparer une composition de confiserie glacée selon les revendications 1 à 8, comprenant les étapes de:
(a) fourniture d'un prémélange d'ingrédients de composition de confiserie glacée;
(b) homogénéisation du prémélange à une pression de 200 à 400 bars;
(c) pasteurisation;
(d) refroidissement;
(e) congélation et aération;
(f) extrusion; et,
(g) éventuellement surgélation.
